**Europäisches Patentamt**

**European Patent Office**

**Office européen des brevets**

(11) Veröffentlichungsnummer: **0 247 550 B1**

# EUROPÄISCHE PATENTSCHRIFT

(45) Veröffentlichungstag der Patentschrift: **16.09.92**

(51) Int. Cl.⁵: **G07C 5/12**

(21) Anmeldenummer: **87107539.6**

(22) Anmeldetag: **23.05.87**

(54) **Fahrtschreiber für Kraftfahrzeuge.**

(30) Priorität: **30.05.86 DE 3618109**
**08.08.86 DE 3626892**

(43) Veröffentlichungstag der Anmeldung:
**02.12.87 Patentblatt 87/49**

(45) Bekanntmachung des Hinweises auf die
Patenterteilung:
**16.09.92 Patentblatt 92/38**

(84) Benannte Vertragsstaaten:
**ES FR GB IT SE**

(56) Entgegenhaltungen:
**EP-A- 0 053 738**
**EP-A- 0 077 994**
**FR-A- 2 195 376**
**FR-A- 2 264 332**
**US-A- 3 434 152**

(73) Patentinhaber: **Moto Meter AG**
**Daimler Strasse 6**
**W-7250 Leonberg(DE)**

(72) Erfinder: **Siefert, Roland**
**Im Herrengarten 6**
**W-7737 Bad Dürrheim(DE)**

(74) Vertreter: **Hoeger, Stellrecht & Partner**
**Uhlandstrasse 14 c**
**W-7000 Stuttgart 1(DE)**

## Beschreibung

Die Erfindung betrifft einen Fahrtschreiber für Kraftfahrzeuge nach dem Oberbegriff des Patentanspruchs 1.

Die bekannten Fahrtschreiber dieser Art (FR-A-2 264 332) haben ein im wesentlichen zylindrisches Gehäuse, das aus zwei Gehäuseteilen besteht, nämlich einem Hauptgehäuse und einem Deckelgehäuse, wobei das Deckelgehäuse klappbar am Hauptgehäuse angeordnet ist und an seiner freien Stirnseite Anzeigeeinrichtungen mit einem Hauptzifferblatt für die sowohl im Hauptgehäuse als auch im Deckelgehäuse untergebrachten Meßinstrumente aufweist. Insbesondere enthält das Deckelgehäuse die Zeituhr und den von dieser angetriebenen Diagrammscheibenträger. Zum Auswechseln einer Diagrammscheibe muß das Deckelgehäuse vom Hauptgehäuse abgeklappt werden, wobei der eigentliche Auswechselvorgang wegen des geringen, zur Verfügung stehenden Raumes zwischen Haupt-und Deckelgehäuse meist nur mit Schwierigkeiten ausgeführt werden kann. Da die im Deckelgehäuse angeordneten Anzeigeeinrichtungen, beispielsweise ein Tachometerzeiger und der Wegstreckenzähler, vom ortsfesten Hauptgehäuse aus angetrieben werden, sind flexible Antriebsverbindungen erforderlich, die in ihre Herstellung aufwendig und störanfällig sind. Schließlich läßt das klappbare Deckelgehäuse mit seinem Hauptzifferblatt praktisch keinen Spielraum für die Gestaltung einer Kraftfahrzeug-Armaturentafel, da wesentliche Anzeigeeinrichtungen bereits an der Stirnseite des klappbaren, zylindrischen Deckelgehäuses vorgesehen sind.

Aus der US-A-3 434 152 ist ein Fahrtschreiber für Kraftfahrzeuge bekannt, bei dem der Diagrammscheibenträger relativ zum Fahrtschreibergehäuse gleitverschieblich und fest mit einer Zeituhr verbunden ist, die also zusammen mit dem Diagrammscheibenträger hin- und herverschoben werden muß. Dies ist nachteilig, weil durch das Mitbewegen der Uhr deren Uhrwerk beschädigt oder in seiner Ganggenauigkeit beeinträchtigt werden könnte. Außerdem steht bei einer Anordnung der Uhr am beweglichen Diagrammscheibenträger nur wenig Platz zur Verfügung, so daß die Uhr klein ausgebildet werden muß, was die Ablesung der Uhr erschwert.

Es ist Aufgabe der Erfindung, unter Behebung der geschilderten Nachteile einen gattungsgemäßen Fahrtschreiber so zu gestalten, daß ein klappbares Deckelgehäuse entfällt, die Diagrammscheiben einfach und sicher eingelegt werden können, und eine vielfältige Ausgestaltung der Anzeigeeinrichtungen und damit der Armaturentafel des Kraftfahrzeuges möglich wird, sowie bei ortsfest gehaltener Zeituhr einen ständigen, zeitgenauen Antrieb des Diagrammscheibenträgers auch dann sicherzustellen, wenn dieser zum Diagrammscheibenwechsel aus dem Fahrtschreibergehäuse herausbewegt ist.

Die Aufgabe wird erfindungsgemäß durch die kennzeichnenden Merkmale des Patentanspruchs 1 gelöst.

Die nachstehende Beschreibung bevorzugter Ausführungsformen der Erfindung dient im Zusammenhang mit beiliegender Zeichnung der weiteren Erläuterung. Es zeigen:

Figur 1    eine schematische, teilweise aufgebrochene Draufsicht eines Fahrtschreibers;

Figur 2    eine Schnittansicht entlang der Linie 2-2 in Figur 1;

Figur 3    eine schematische, teilweise aufgebrochene Draufsicht einer weiteren Ausführungsform eines Fahrtschreibers;

Figur 4    eine vergrößerte Schnittansicht entlang der Linie 4-4 in Figur 3;

Figur 5    eine Schnittansicht entlang der Linie 5-5 in Figur 3;

Figur 6    eine Ansicht einer anderen Ausführungsform eines Fahrtschreibers mit anhebbaren Schreibstiften und

Figur 7    eine schematische Schnittansicht entlang der Linie 7-7 in Figur 6.

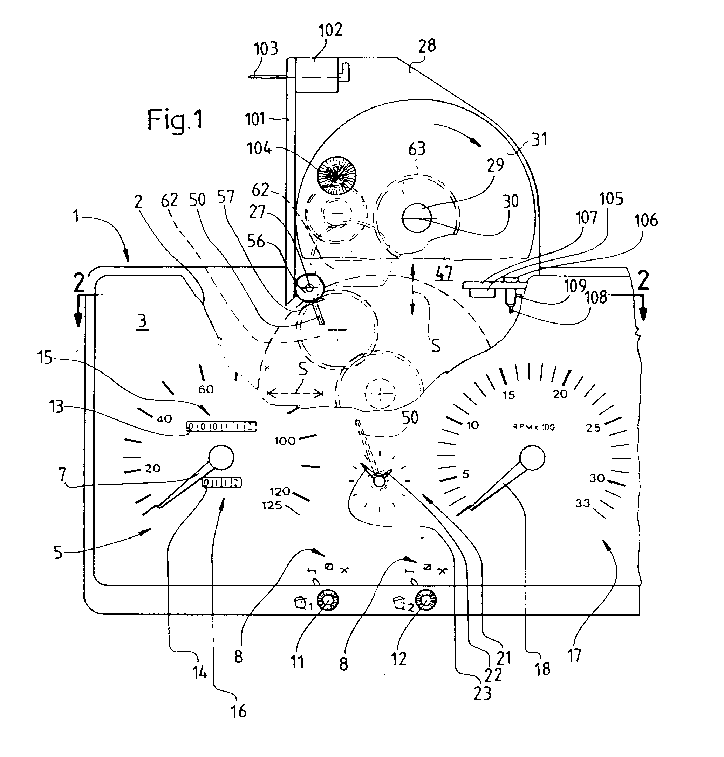

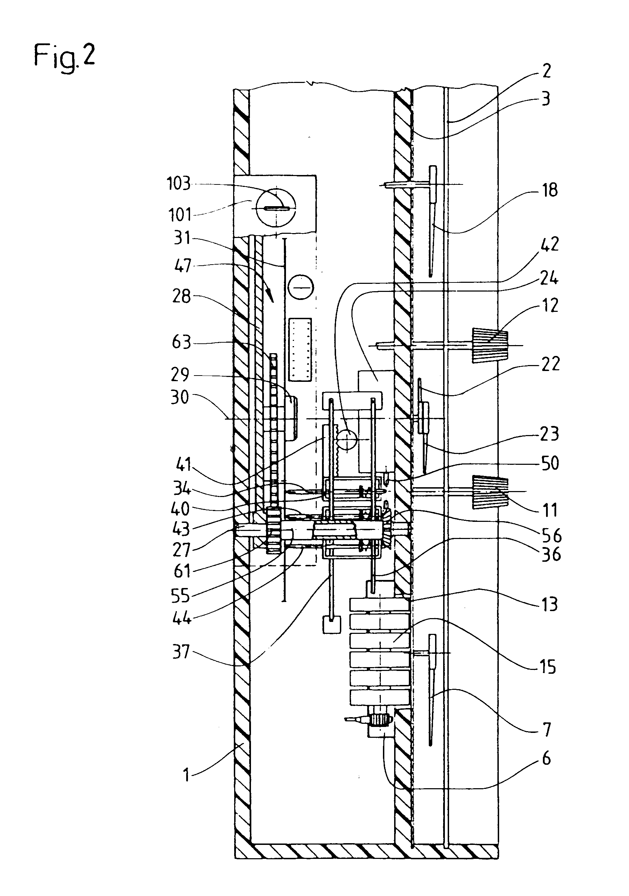

Der in Figur 1 und 2 dargestellte Fahrtschreiber weist ein im wesentlichen quaderförmiges Gehäuse 1 auf, dessen Querschnittsform aus Figur 2 ersichtlich ist. Das Gehäuse 1 ist an seiner Vorderseite von einer durchsichtigen Scheibe 2 aus Glas oder Kunststoff abgedeckt. Dahinter befindet sich ein Zifferblatt 3 mit mehreren Skalen, über welche Zeiger spielen.

Das Zifferblatt umfaßt eine Tachometerskale 5, der ein von einem Geschwindigkeitsmesser 6 (Figur 2) angetriebener Zeiger 7 zugeordnet ist. Weiterhin umfaßt das Zifferblatt 3 Symbole 8 (Figur 1), die jeweils einem Zeitgruppenschalter 11 bzw. 12 zugeordnet sind. An diesen Schaltern können zwei Fahrer eines Kraftfahrzeuges in herkömmlicher Weise abwechselnd ihre Arbeits-, Ruhezeiten und dergleichen einstellen. Schließlich umfaßt das Zifferblatt 3 Schlitze 13, 14, an denen in bekannter Weise die anzeigenden Ziffern eines Wegstreckenzählers 15 bzw. eines Tageskilometerzählers 16 sichtbar werden. Die Zähler liegen hinter dem Zifferblatt 3 und sind mit dem einstückigen, unteilbaren Gehäuse 1 ständig fest verbunden.

Das Zifferblatt 3 umfaßt ferner eine Drehzahlskale 17 mit Zeiger 18 eines ebenfalls im Gehäuse 1 untergebrachten (nicht dargestellten) Drehzahlmessers.

Über einem seitlich zur Tachometerskale 5 versetzten Zifferblatt 21 einer Zeituhr mit Uhrwerk 24 sind Uhrzeiger 22, 23 verdrehbar. Auch das Uhrwerk 24 der Zeituhr ist im Gehäuse 1 ortsfest gelagert.

Im Gehäuse 1 ist weiterhin um eine Achse 27 schwenkbar eine Platte 28 gelagert, auf welcher ein vom Uhrwerk 24 drehend angetriebener Diagrammscheibenträger 29 angeordnet ist. Der Diagrammscheibenträger 29 dient in an sich bekannter Weise der Aufnahme einer oder mehrerer Diagrammscheiben, von denen auf der Zeichnung lediglich eine Diagrammscheibe 31 dargestellt ist. Auf den Diagrammscheiben werden in ebenfalls herkömmlicher Weise im Betriebszustand des Fahrtschreibers die von den Instrumenten im Gehäuse 1 gelieferten Meßwerte aufgezeichnet. Die Instrumente umfassen zu diesem Zweck Registriereinrichtungen, die ihrerseits in bekannter Weise mit Schreibstiften verbunden sind, welche die Oberfläche der Diagrammscheibe(n) beschriften. Mit derartigen Registriereinrichtungen sind insbesondere auch die Zeitgruppenschalter 11, 12 versehen. Ein in Figur 2 sichtbares Ritzel 42 wird über den Zeitgruppenschalter 11 verdreht. Das Ritzel 42 kämmt mit einer Zahnstange 41, die starr mit dem Gehäuse 40 eines Schreibstiftes 34 verbunden ist. Das Schreibstiftgehäuse 40 ist auf einer von zwei Stangen 36, 37 gebildeten Führung quer über die Ebene der Diagrammscheibe 31 verschieblich. Somit kann bei Verdrehung des Zeitgruppenschalters 11 der Schreibstift 34 so eingestellt werden, daß er auf die Diagrammscheibe 31 eine Kreisspur bestimmten Radius konzentrisch zur Drehachse 30 der Diagrammscheibe 31 aufzeichnet. Weitere Schreibstifte 43, 44 sind dem Geschwindigkeitsmesser 6 und dem Wegstreckenzähler 15 zugeordnet und mit diesen Bauteilen über entsprechende Brückenglieder antriebsmäßig verbunden. Durch die Brückenglieder, beispielsweise Zahnstangen entsprechend der Zahnstange 41, wird die räumliche Entfernung zwischen den Meßinstrumenten und der Diagrammscheibe 31 überbrückt, so daß dort die von den Instrumenten angezeigten Meßwerte richtig aufgezeichnet werden.

In Figur 1 ist der lineare Schreibbereich, innerhalb dessen sich die Schreibstifte 34, 43 und 44 bewegen, durch einen Doppelpfeil S angedeutet.

Durch Verschwenken der Platte 28 kann der Diagrammscheibenträger 29 im Außer-Betriebszustand des Fahrtschreibers nach oben aus dem Gehäuse herausgeschwenkt werden, wo in bequemer Weise Diagrammscheiben 31 ausgewechselt werden können.

Im Betriebszustand liegt der Diagrammscheibenträger 29 mit der oder den an ihm befestigten Diagrammscheiben in einer Kammer 47 des Gehäuses 1. Bei der dargestellten Ausführungsform verläuft die Schwenkachse 27 der Platte 28 parallel zur Achse des Tachometerzeigers 7, die Platte 28 wird also in einer Ebene verschwenkt, die im wesentlichen zum Zifferblatt 3 an der Vorderseite des Gehäuses 1 parallel ist. Gewöhnlich ist die Scheibe 2 und mit ihr das Gehäuse 1 zur Horizontalen schräg geneigt, so daß der Fahrer eines Kraftfahrzeuges das Zifferblatt 3 bequem überschauen kann. In diesem Falle kann die Platte 28 in einer entsprechend schräg verlaufenden Ebene oben aus dem Gehäuse 1 herausgeschwenkt werden. Die Schwenkachse 27 muß nicht parallel zur Drehachse des Tachometerzeigers 7 verlaufen. In diesem Falle kann auch bei schräg angeordnetem Gehäuse erreicht werden, daß die Platte 28 und der Diagrammscheibenträger 29 in einer im wesentlichen vertikalen Ebene beweglich sind.

Bei der dargestellten Ausführungsform liegt die den Diagrammscheibenträger 29 aufnehmende Kammer 47 etwa in der Mitte zwischen den Skalen 5, 17 des Zifferblattes 3 und hinter den Anzeigeeinrichtungen der diesen Zeigern zugeordneten Meßinstrumenten. Im Betriebszustand ist daher der Diagrammscheibenträger 29 gegenüber der Tachometerskale 5 und der Drehzahlskale 17 seitlich versetzt. Dieser seitliche Versatz ist nicht unbedingt erforderlich. Bei einer anderen Ausführungsform der Erfindung kann die Drehachse 27 auch so angeordnet werden, daß der Diagrammscheibenträger 29 im Betriebszustand des Fahrtschreibers ohne seitlichen Versatz hinter der Anzeigeeinrichtung 6 des Tachometers liegt, beispielsweise so, daß die Drehachse 30 des Diagrammscheibenträgers 29 im wesentlichen koaxial mit der Zeigerwelle des Zeigers 7 verläuft. Auf diese Weise erhält man eine besonders kompakte, platzsparende Ausführungsform, wobei durch das oben erfolgende Herausschwenken des Diagrammscheibenträgers 29 dennoch die Diagrammscheiben 31 leicht zugänglich gemacht werden können, ohne das Gehäuse durch Aufklappen trennen zu müssen. Mit dem Herausbewegen des Diagrammscheibenträgers 29 aus dem Gehäuse 1 müssen auch keinerlei Meßinstrumente oder Teile dieser Instrumente sowie Registriereinrichtungen mit bewegt werden, wie dies bisher bei den klappbaren Deckelgehäusen bekannter Fahrtschreiber der Fall war.

Die Bewegung des Diagrammscheibenträgers erfolgt in einer Ebene, welche zur Ebene der Diagrammscheibe im wesentlichen parallel verläuft.

Der Diagrammscheibenträger 29 wird ausgehend vom Uhrwerk 24 der Zeituhr über eine Welle 50 angetrieben. Auf der Schwenkachse 27 der den Diagrammscheibenträger 29 tragenden Platte 28 ist drehbar eine Buchse 55 angeordnet, die an ihrem in Figur 2 rechts gelegenen Ende ein Kegelzahnrad 56 aufweist. Dieses Kegelzahnrad 56 kämmt mit dem Kegelzahnrad 57 (Figur 1), welches über die Welle 50 zum Uhrwerk 24 zeitgenau angetrieben ist. Die Buchse weist ferner an ihrem in Figur 2 links liegenden Ende ein Zahnrad 61 (Figur 2) auf, welches mit einem auf der Platte 28 gelagerten Zahnrad 62 (Figur 1) kämmt. Ausgehend von diesem Zahnrad 62 wird über ein weiteres Zahnrad 63 der damit drehfest verbundenen Diagrammscheibenträger 29 zeitgenau angetrieben. Aufgrund dieser Getriebeverbindung kann die Platte 28 um die Achse 27 verschwenkt werden, ohne den Eingriff mit dem Uhrwerk 24 und den zeitgenauen Antrieb zu beeinträchtigen. Beim Zurückverschwenken der Platte 28 in die Kammer 47 wird im übrigen ein Zahnspiel dieses Getriebezuges zwischen Zeituhr und Diagrammscheibenträger beseitigt.

Wie dargestellt, ist mit der Platte 28, von dieser senkrecht abstehend, ein Deckel 101 verbunden, der zusammen mit der Platte 28 verschwenkt wird und im Betriebszustand des Fahrtschreibers die den Diagrammscheibenträger 29 aufnehmende Kammer 47 dicht verschließt. Am Deckel 101 ist ein Schloß 102 mit abziehbarem Schlüssel 103 angeordnet. Das Schloß 102 ist in bekannter Weise als Rastschloß so ausgebildet, daß es beim Verschwenken des Deckels 101 in Schließstellung ohne Verdrehung des Schlüssels 103 einschnappt und den Deckel verschließt. Der Schlüssel 103 muß nur zum Öffnen in das Schloß 102 eingeführt und verdreht werden.

Der Platte 28 kann im übrigen in an sich bekannter und daher nicht eigens dargestellter Weise eine zweite Rasteinrichtung zugeordnet werden, welche die Platte im Außer-Betriebszustand des Fahrtschreibers in ihrer nach oben aus dem Gehäuse heraus verschwenkten Position feststellt, so daß Diagrammscheiben 31 bequem ausgewechselt werden können, ohne die Platte 28 festhalten zu müssen.

Der Deckel 101 deckt beim Verschließen nicht nur die den Diagrammscheibenträger 29 und die Diagrammscheiben 31 aufnehmende Kammer 47 des Gehäuses 1 ab, sondern zusätzlich noch weitere Funktionsteile des Fahrtschreibers. Zu diesen Funktionsteilen gehört insbesondere ein Einstellknopf 104 für die Zeituhr. Der Knopf 104, der in Figur 1 schematisch angedeutet ist, ist an der der Diagrammscheibe 31 abgekehrten Seite der Platte 28 gelagert. Er ist, wie ebenfalls aus Figur 1 ersichtlich, über Getrieberäder an das Getrieberad 62 angeschlossen, so daß beim Verdrehen des Knopfes 104 die Zeituhr eingestellt werden kann. Beim Verschließen des Deckels 101 ist der Stellknopf 104 nicht mehr zugänglich.

In der Kammer 47 sind als weitere Funktionsteile des Fahrtschreibers ferner ein Kodierschalter 105 und eine Steckbuchse 106 an einem Träger 107 fest angeordnet (wie in Figur 1 schematisch angedeutet). An zwei Fahnen 108, 109 der Steckbuchse 106 können elektrische Leitungen angeordnet werden. Wie an sich bekannt, kann am entsprechend eingestellten Kodierschalter 105, der gewöhnlich zusätzlich plombiert ist, an der Steckbuchse 106 die Richtigkeit einer Messung überprüft oder eine entsprechende Eichung durchgeführt werden. Bei geöffnetem Deckel 101 ist die Steckbuchse 106 ohne Behinderung zugänglich. Bei geschlossenem Deckel 101 sind auch die Steckbuchse 106 und der Kodierschalter 107 unzugänglich abgedeckt.

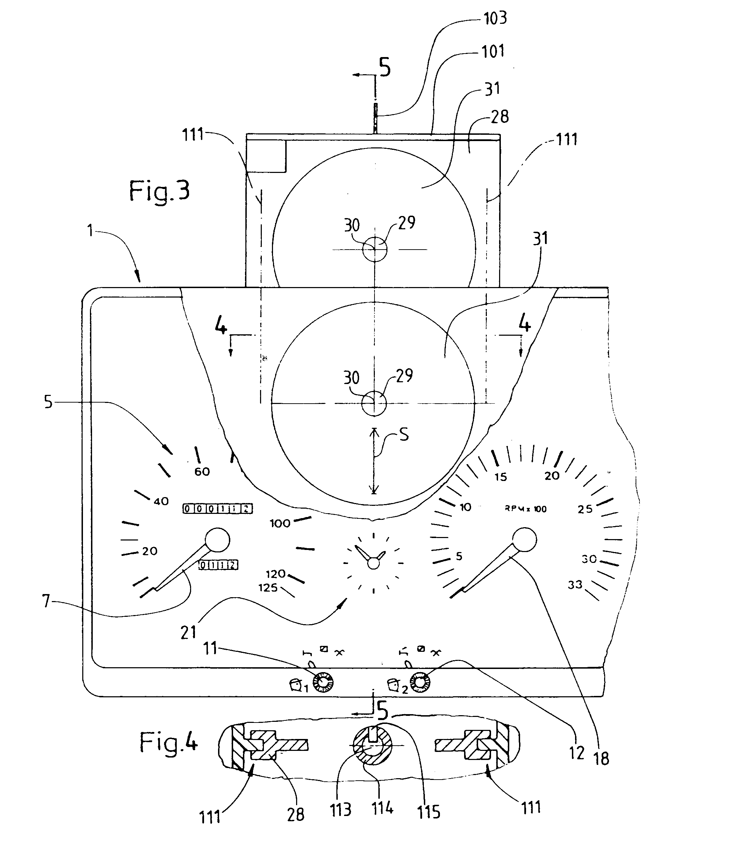

Die Figuren 3 bis 5 zeigen eine gegenüber Figur 1 und 2 abgewandelte Ausführungsform eines Fahrtschreibers. In den Figuren 3 bis 5 sind einander entsprechende Teile mit den gleichen Bezugszeichen wie in Figur 1 und 2 bezeichnet.

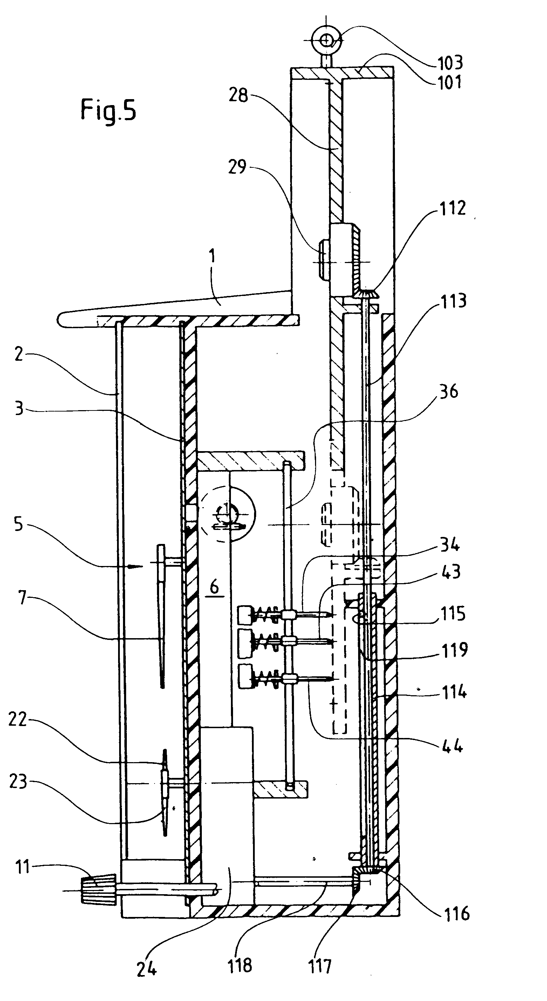

Der wesentliche Unterschied zwischen den beiden Ausführungsformen besteht darin, daß die den Diagrammscheibenträger 29 und die Diagrammscheibe(n) tragende Platte 28 mit dem Deckel 101 nicht schwenkbar, sondern gleitverschieblich nach oben aus dem Gehäuse 1 heraus bewegbar ist. Hierzu ist die Platte 28 (vgl. Figur 4) beidseits in Gleitführungen 111 verschieblich gelagert, deren Mittellinien in Figur 3 strichpunktiert angegeben und ebenfalls mit den Bezugszeichen 111 bezeichnet sind. Der Schreibbereich S ist bei der Ausführungsform gemäß Figur 3 bis 5 gegenüber dem Schreibbereich S der Ausführungsform nach Figur 1 und 2 um 90° verdreht und verläuft parallel zur Schieberichtung der Platte 28 (Figur 3). Im übrigen gilt alles, was im Zusammenhang mit der Ausführungsform nach Figur 1 und 2 ausgeführt wurde, auch für die Ausführungsform nach Figur 3 bis 5. Insbesondere kann der Diagrammscheibenträger 29 im Betriebszustand des Fahrtschreibers auch ohne seitlichen Versatz direkt hinter der Tachometerskale 5 liegen.

Die Figur 5 zeigt mit ausgezogenen Linien den Diagrammscheibenträger 28 in seiner nach oben aus dem Fahrtschreibergehäuse 1 herausgeschobenen Position. Die Betriebsstellung mit eingeschobenem Diagrammscheibenträger 29 ist in Figur 5 gestrichelt dargestellt.

Um bei dem Herausschieben des Diagrammscheibenträgers 29 seine getriebemäßige Verbindung mit dem Uhrwerk 24 nicht zu unterbrechen, ist folgende Anordnung getroffen:
Ein den Diagrammscheibenträger 29 antreibendes Kegelrad 112 ist drehfest mit einer Stange 113 verbunden. Die Stange 113 ist in einem parallel zu ihr verlaufenden Rohr 114 gleitverschieblich (teleskopierend) geführt. Von der Stange 113 steht ein Stift 115 seitlich ab, der sich in einen axial verlaufenden Schlitz 119 im Rohr 114 hinein erstreckt. Auf diese Weise sind Stange 113 und Rohr 114 drehfest, jedoch gleitverschieblich miteinander verbunden. Bei einem Herausziehen der Platte 28 aus dem Gehäuse 1 gleitet die Stange 113 aus dem Rohr 114 nach oben, ohne ihre drehschlüssige Verbindung mit diesem Rohr zu verlieren. Das Rohr 114 weist an seiner in Figur 5 unten gelegenen Seite ein Kegelrad 116 auf, das mit dem Kegelrad 117 kämmt. Das Kegelrad 117 wird über eine Welle 118 vom Uhrwerk 24 angetrieben. Somit steht der Diagrammscheibenträger 29 ständig in antriebsmäßiger Verbindung mit dem Uhrwerk 24, auch wenn er im Außer-Betriebszustand des Fahrtschreibers aus dessen Gehäuse 1 herausgeschoben ist.

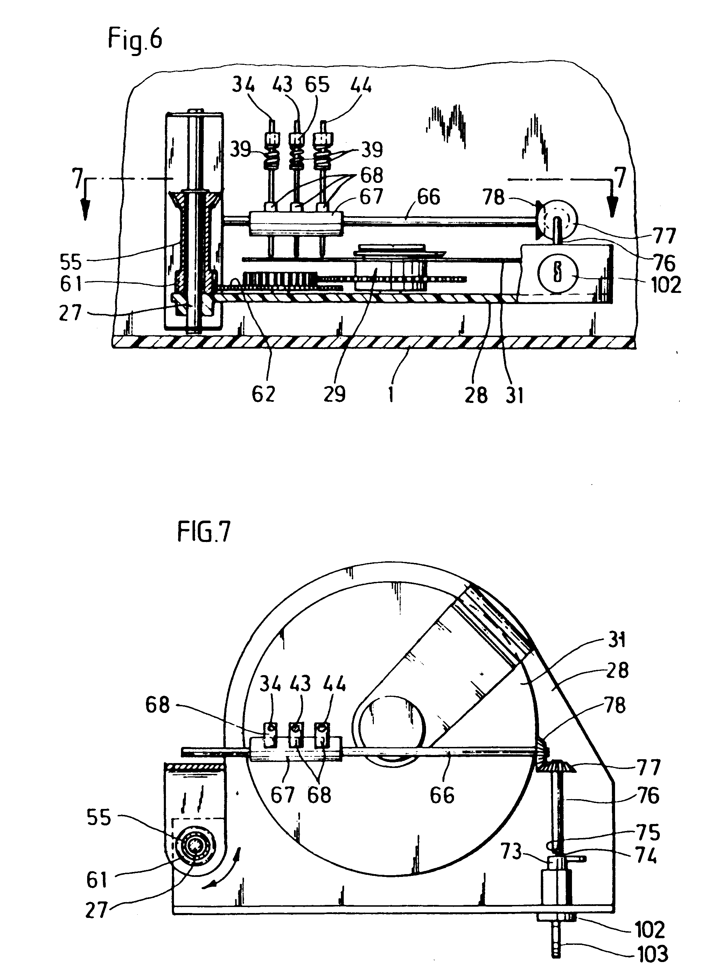

Wie in Figur 6 bei einer etwas abgewandelten Ausführungsform eines Fahrtenschreibers dargestellt, sind die Schreibstifte 34, 43, 44 verschieblich an einem Schlittenteil 65 gelagert und werden von Federn 39 auf die Diagrammscheibe 31 vorgespannt. Wenn die den Diagrammscheibenträger 29 halternde Platte 28 um die Achse 27 verschwenkt wird, müssen die Schreibstifte 34, 43, 44 mit ihren Spitzen von der Diagrammscheibe 31 abgehoben werden, um unerwünschte Aufzeichnungsspuren auf der Diagrammscheibe zu vermeiden. Zu diesem Zwecke ist an einer im Gehäuse 1 gelagerten Welle 66 ein verhältnismäßig langgestreckter, exzentrischer Nocken 67 gelagert, der beim Verdrehen der Welle 66 mittels von den Schreibstiften abstehender Vorsprünge 68 (Figur 7) die Schreibstifte von der Diagrammscheibe 31 abhebt, so daß nunmehr die Diagrammscheibe 31 zusammen mit der Platte 28 aus der Kammer 47 herausbewegt werden kann, ohne hierbei von den Schreibstiften mit unerwünschten Schreibspuren versehen zu werden.

Die Welle 66 und damit der Nocken 67 kann in verschiedener Weise zum Zwecke der Anhebung der Schreibstifte verdreht werden. Beispielsweise könnte die Verdrehung von der Schwenkbewegung oder Verschiebebewegung der Platte 28 abgeleitet sein. Falls der Fahrtschreiber eine automatische Einzugs- und Auswerfeinrichtung für die Diagrammscheiben aufweist, kann gleichzeitig mit dem Antrieb dieser Einrichtung die Welle 66 um den notwendigen Winkelbereich verstellt werden, um die Schreibstifte von der Diagrammscheibe abzuheben. Bei der in Figur 6 und 7 dargestellten Ausführungsform wird die Abhebebewegung der Schreibstifte von dem Schloß 102 mit zugehörigem Schlüssel 103 abgeleitet. Das Schloß 102 dient der Verriegelung eines mit der Platte 28 verbundenen Wandteils, welches bei geschlossener Kammer 47 etwa in der Ebene der von der Scheibe 2 gebildeten Vorderwand des Gehäuses 1 liegen kann. Wie schematisch dargestellt, greift ein mit einem drehbaren Schloßteil 73 fest verbundener Kupplungsteil 74 formschlüssig in einen korrespondierenden Schlitz 75 an der Stirnseite einer drehbar gelagerten Welle 76 ein, sobald das erwähnte Wandteil geschlossen ist. Somit kann durch eine Drehbewegung des Schlüssels 103 die Welle 76 verdreht werden. Die Welle 76 trägt ein Kegelzahnrad 77, das mit einem auf der Welle 66 sitzenden Kegelrad 78 kämmt. Beim Verdrehen des Schlüssels 103 können somit durch die dadurch bedingte Drehung der Welle 66 um den erforderlichen Winkelbereich die Schreibstifte 34, 43, 44 von der Diagrammscheibe 31 abgehoben und wieder in Schreibstellung zurückgebracht werden.

Es besteht häufig die Vorschrift, einen Fahrtschreiber zur Verhinderung unerlaubter Manipulationen zu plombieren. Auch dies ist bei dem hier vorgeschlagenen Fahrtschreiber in einfacher Weise möglich, beispielsweise dadurch, daß man die Anzeige- und Registriereinrichtungen gemeinsam in einem plombierbaren Gehäuseblock unterbringt und diesen Block in plombierter Form in das Gehäuse 1 einsetzt.

**Patentansprüche**

1.  Fahrtschreiber für Kraftfahrzeuge mit einem Gehäuse (1) mit im Gehäuse angeordneten Meßinstrumenten, einschließlich Geschwindigkeitsmesser (6), Wegstreckenzähler (15, 16), Zeituhr (24), wobei die Meßinstrumente Registriereinrichtungen und Anzeigeeinrichtungen umfassen, mit an die Registriereinrichtungen angeschlossenen Schreibstiften (34, 43, 44), mit wenigstens einem an der Vorderseite des Gehäuses vorgesehenen, den Anzeigeeinrichtungen zugeordneten, die Skalen des Geschwindigkeitsmessers, des Wegstreckenzählers sowie von Zeitgruppen (8) umfassenden Hauptzifferblatt (5) und mit einem von der Zeituhr drehend angetriebenen Diagrammscheibenträger (29) zur Aufnahme wenigstens einer Diagrammscheibe (31), auf der die Schreibstifte die von den Meßinstrumenten angezeigten Meßwerte aufzeichnen, wobei die Registriereinrichtungen ständig unlösbar mit den Anzeigeeinrichtungen verbunden sind, der Diagrammscheibenträger in einer separaten, vom Hauptzifferblatt räumlich versetzten Kammer (47) des Gehäuses angeordnet ist, die Schreibstifte ebenfalls zum Hauptzifferblatt versetzt über der Diagrammscheibe angeordnet sowie mit den Registriereinrichtungen verbunden sind, und wobei der Diagrammscheibenträger zum Zwecke des Diagrammscheibenwechsels relativ zu den gehäusefesten Registrier- und Anzeigeeinrichtungen der Meßinstrumente beweglich ist,
    **dadurch gekennzeichnet,**
    daß die Zeituhr (24) relativ zum beweglichen Diagrammscheibenträger (29) ortsfest im Gehäuse (1) angeordnet und über einen Getriebezug (54 bin 61) ständig mit dem beweglichen Diagrammscheibenträger verbunden ist, und daß der Diagrammscheibenträger (29) zum Zwecke des Diagrammscheibenwechsels in einer Ebene beweglich ist, die im wesentlichen parallel zum Hauptzifferblatt (5) und zur im Diagrammscheibenträger gehaltenen Diagrammscheibe ist.

2. Fahrtschreiber nach Anspruch 1, dadurch gekennzeichnet, daß die Schreibstifte (34, 43, 44) zum Zwecke des Diagrammscheibenwechsels relativ zur Ebene der Diagrammscheibe (31) anhebbar sind.

3. Fahrtschreiber nach Anspruch 2, dadurch gekennzeichnet, daß eine Bewegung des Diagrammscheibenträgers (29) relativ zu den Registrier- und Anzeigeeinrichtungen automatisch das Anheben der Schreibstifte (34, 43, 44) auslöst.

4. Fahrtschreiber nach Anspruch 2, dadurch gekennzeichnet, daß die Schreibstifte (34, 43, 44) durch Betätigen eines die Kammer verschließenden Schlosses (102) anhebbar sind.

5. Fahrtschreiber nach Anspruch 1, dadurch gekennzeichnet, daß der Diagrammscheibenträger (29) auf einer relativ zum Gehäuse (1) gleitverschieblichen Platte (28) angeordnet ist.

6. Fahrtschreiber nach Anspruch 1, dadurch gekennzeichnet, daß der Diagrammscheibenträger (29) auf einer drehbar am Gehäuse (1) gelagerten Platte (28) angeordnet ist, die in die Kammer (47) ein- und aus ihr herausschwenkbar ist.

7. Fahrtschreiber nach einem der voranstehenden Ansprüche, dadurch gekennzeichnet, daß die Anzeige- und Registriereinrichtungen in einem plombierbaren Gehäuseblock zusammengefaßt und dieser Block in das Gehäuse (1) einsetzbar ist.

8. Fahrtschreiber nach Anspruch 1, dadurch gekennzeichnet, daß die Kammer (47) und der Diagrammscheibenträger (29) im Betriebszustand des Fahrtschreibers räumlich hinter dem Geschwindigkeitsmesser (6) und dessen Zeiger (7) angeordnet sind, und der Diagrammscheibenträger (29) nach oben aus dem Gehäuse (1) herausbewegbar ist.

9. Fahrtschreiber nach Anspruch 8, dadurch gekennzeichnet, daß der Diagrammscheibenträger (29) um eine Achse (27) schwenkbar im Gehäuse (1) gelagert und bei ortsfest verbleibendem Geschwindigkeitsmesser (6) nach oben aus dem Gehäuse (1) herausverschwenkbar ist.

10. Fahrtschreiber nach Anspruch 8, dadurch gekennzeichnet, daß der Diagrammscheibenträger (29) gleitverschieblich im Gehäuse (1) gelagert und bei ortsfest verbleibendem Geschwindigkeitsmesser (6) nach oben aus dem Gehäuse herausschiebbar ist.

11. Fahrtschreiber nach Anspruch 8, dadurch gekennzeichnet, daß der Diagrammscheibenträger (29) in einer im wesentlichen vertikalen Ebene beweglich ist.

12. Fahrtschreiber nach Anspruch 8, dadurch gekennzeichnet, daß die Drehachse (27) des Diagrammscheibenträgers (29) im Betriebszustand des Fahrtschreibers im wesentlichen parallel zur Welle des Zeigers (7) des Geschwindigkeitsmessers (6) verläuft.

13. Fahrtschreiber nach Anspruch 8, dadurch gekennzeichnet, daß die den Diagrammscheibenträger (29) aufnehmende Kammer (47) durch einen abschließbaren Deckel (101) verschließbar ist.

14. Fahrtschreiber nach Anspruch 13, dadurch gekennzeichnet, daß der Deckel (101) des an einer den Diagrammscheibenträger (29) tragenden Platte (28) angeordnet ist.

15. Fahrtschreiber nach Anspruch 13, dadurch gekennzeichnet, daß der Deckel (101) gleichzeitig weitere Funktionsteile (105, 106) des Fahrtschreibers, insbesondere einen Stellknopf (104) für die Zeituhr (24) abdeckt.

16. Fahrtschreiber nach Anspruch 15, dadurch gekennzeichnet, daß der Stellknopf (104) für die Zeituhr (24) an der den Diagrammscheibenträger (29) haltenden Platte (28) angeordnet ist.

17. Fahrtschreiber nach Anspruch 15, dadurch gekennzeichnet, daß die weiteren Funktionsteile einen Kodierschalter (105) und eine Steckbuchse (106) umfassen.

18. Fahrtschreiber nach Anspruchs 9, dadurch gekennzeichnet, daß ein die Zeituhr (24) ständig mit dem schwenkbaren Diagrammscheibenträger (29) verbindender Getriebezug (50, 57, 62, 63) ein zur Schwenkachse (27) koaxiales Getrieberad (56) einschließt.

19. Fahrtschreiber nach Anspruch 10, dadurch gekennzeichnet, daß ein die Zeituhr (24) ständig mit dem gleitverschieblichen Diagrammscheibenträger (29) verbindender Getriebezug (112, 116, 117) eine drehfeste Teleskopverbindung (113, 114, 115) einschließt.

20. Fahrtschreiber nach Anspruch 8, dadurch gekennzeichnet, daß der Geschwindigkeitsmesser (6), und der Wegstreckenzähler (15, 16) mit dem Hauptzifferblatt (5) und die Zeiger (7, 18, 22, 23) sowie die Registriereinrichtungen mit den Schreibstiften (34, 43, 44) von einem gemeinsamen, ortsfesten, unteilbaren Gehäuse (1) aufgenommen sind.

**Claims**

1. Tachograph for motor vehicles, having a housing (1) with measuring instruments arranged in the housing, including a speedometer (6), odometer (15, 16) and clock (24), the measuring instruments comprising recording devices and display devices, having styluses (34, 43, 44) connected to the recording devices, having at least one main dial, which is provided on the front side of the housing, which is assigned to the display devices and comprises the scales of the speedometer, the odometer and time groups (8), and having a speed-time chart carrier (29), rotatably driven by the clock, for accommodating at least one speed-time chart (31) on which the styluses record the measured values displayed by the measuring instruments, the recording devices being connected to the display devices in a permanently undetachable fashion, the speed-time chart carrier being arranged in a separate chamber (47) of the housing which is spatially offset from the main dial, the styluses likewise being arranged over the speed-time chart offset with respect to the main dial and being connected to the recording devices, and the speed-time chart carrier being movable relative to the recording and display devices, which are fixed in the housing, of the measuring instruments for the purpose of replacing the speed-time chart, characterised in that the clock (24) is arranged fixed in the housing (1) relative to the movable speed-time chart carrier (29) and is permanently connected via a gear train (54 to 61) to the movable speed-time chart carrier, and in that for the purpose of replacing the speed-time chart the speed-time chart carrier (29) can be moved in a plane which is essentially parallel to the main dial (5) and to the speed-time chart held in the speed-time chart carrier.

2. Tachograph according to Claim 1, characterised in that the styluses (34, 43, 44) can be raised relative to the plane of the speed-time chart (31) for the purpose of replacing the speed-time chart.

3. Tachograph according to Claim 2, characterised in that a movement of the speed-time chart carrier (29) relative to the recording and display devices automatically triggers the raising of the styluses (34, 43, 44).

4. Tachograph according to Claim 2, characterised in that the styluses (34, 43, 44) can be raised by operating a lock (102) which locks the chamber.

5. Tachograph according to Claim 1, characterised in that the speed-time chart carrier (29) is arranged on a plate (28) which can be slidably displaced relative to the housing (1).

6. Tachograph according to Claim 1, characterised in that the speed-time chart carrier (29) is arranged on a plate (28), which is mounted rotatably on the housing (1) and can be swivelled into and out of the chamber (47).

7. Tachograph according to one of the preceding claims, characterised in that the display and recording devices are combined in a sealable housing block and this block can be inserted into the housing (1).

8. Tachograph according to Claim 1, characterised in that the chamber (47) and the speed-time chart carrier (29) are arranged spatially behind the speedometer (6) and its pointer (7) in the operating state of the tachograph, and the speed-time chart carrier (29) can be moved upwards out of the housing (1).

9. Tachograph according to Claim 8, characterised in that the speed-time chart carrier (29) is mounted in the housing (1) rotatably about an axis (27) and can be swivelled upwards out of the housing (1), with the speedometer (6) remaining fixed.

10. Tachograph according to Claim 8, characterised in that the speed-time chart carrier (29) is mounted in the housing (1) in a manner capable of displacement by sliding and can be slid upwards out of the housing with the speedometer (6) remaining fixed.

11. Tachograph according to Claim 8, characterised in that the speed-time chart carrier (29) can be moved in an essentially vertical plane.

12. Tachograph according to Claim 8, characterised in that in the operating state of the tachograph the axis (27) of rotation of the speed-time chart carrier (29) extends essentially parallel to the shaft of the pointer (7) of the speedometer (6).

13. Tachograph according to Claim 8, characterised in that the chamber (47) accommodating the speed-time chart carrier (29) can be closed by a sealable cover (101).

14. Tachograph according to Claim 13, characterised in that the cover (101) of the [sic] is arranged on a plate (28) supporting the speed-time chart carrier (29).

15. Tachograph according to Claim 13, characterised in that the cover (101) simultaneously covers further functional parts (105, 106) of the tachograph, in particular a setting knob (104) for the clock (24).

16. Tachograph according to Claim 15, characterised in that the setting knob (104) for the clock (24) is arranged on the plate (28) holding the speed-time chart carrier (29).

17. Tachograph according to Claim 15, characterised in that the further functional parts comprise a coding switch (105) and a socket-contact (106).

18. Tachograph according to Claim 9, characterised in that a gear train (50, 57, 62, 63) permanently connecting the clock (24) to the swivelable speed-time chart carrier (29) includes a gear wheel (56) coaxial with the swivel axis (27).

19. Tachograph according to Claim 10, characterised in that a gear train (112, 116, 117) permanently connecting the clock (24) to the slidably displaceable speed-time chart carrier (29) includes a rotationally fixed telescopic connection (113, 114, 115).

20. Tachograph according to Claim 8, characterised in that the speedometer (6) and the odometer (15, 16) with the main dial (5), and the pointers (7, 18, 22, 23) as well as the recording devices with the styluses (34, 43, 44) are accommodated by a common, fixed, indivisible housing (1).

**Revendications**

1. Tachygraphe pour véhicules automobiles comportant un boîtier (1) logeant des instruments de mesure comprenant un tachymètre (6), des compteurs de distance (15, 16), une horloge (24), des instruments de mesure comportant des installations d'enregistrement et d'affichage avec des stylets (34, 43, 44) reliés aux installations d'enregistrement, avec au moins un cadran principal (5) prévu sur la face avant du boîtier pour être associé aux installations d'affichage et portant les échelles du tachymètre, des compteurs de distance ainsi que des groupes de temps (8), et un support de disque d'enregistrement (29), entraîné en rotation par l'horloge pour enregistrer sur au moins un disque d'enregistrement (13) sur lequel les stylets inscrivent les grandeurs de mesure fournies par les instruments de mesure, les installations d'enregistrement étant toujours reliées de manière solidaire aux installations d'affichage, le support de disque d'enregistrement étant placé dans une chambre (47) distincte, séparée géométriquement du cadran dans le boîtier, les stylets étant également décalés par rapport au cadran, au-dessus des disques d'enregistrement en étant reliés aux installations d'enregistrement et le support de disque d'enregistrement étant mobile par rapport aux installations d'enregistrement et d'affichage solidaire du boîtier des instruments de mesure pour permettre le changement de disque d'enregistrement, tachygraphe caractérisé en ce que l'horloge (24) est montée fixe dans le boîtier (1) par rapport au support mobile (29) du disque d'enregistrement, et est reliée en permanence par une transmission (54-61) au support mobile de disque d'enregistrement et en ce que le support de disque d'enregistrement (29) est mobile dans un plan pour permettre le changement des disques d'enregistrement, plan qui est principalement parallèle au cadran principal (5) et par rapport aux disques d'enregistrement portés par le support à disque d'enregistrement.

2. Tachygraphe selon la revendication 1, caractérisé en ce que les stylets (34, 43, 44) peuvent être relevés par rapport au plan du disque d'enregistrement (31) pour permettre le remplacement des disques.

3. Tachygraphe selon la revendication 2, caractérisé en ce qu'un mouvement du support de disque d'enregistrement (29) par rapport aux installations d'enregistrement et d'affichage est déclenché automatiquement par le soulèvement des stylets (34, 43, 44).

4. Tachygraphe selon la revendication 2, caractérisé en ce que les tiges d'écriture (34, 43, 44) peuvent être soulevées par l'actionnement d'une serrure (102) fermant la chambre.

5. Tachygraphe selon la revendication 1, caractérisé en ce que le support de disque d'enregistrement (29) est monté sur une plaque (28) coulissante par rapport au boîtier (1).

6. Tachygraphe selon la revendication 1, caractérisé en ce que le support de disque d'enregistrement (29) est monté sur une plaque (28) portée de manière pivotante par rapport au boîtier (1), et cette plaque peut être basculée dans ou en dehors de la chambre (47).

7. Tachygraphe selon l'une des revendications précédentes, caractérisé en ce que les installations d'affichage et d'enregistrement sont réunies dans un bloc de boîtier susceptible d'être plombé et ce bloc se place dans le boîtier (1).

8. Tachygraphe selon la revendication 1, caractérisé en ce que la chambre (47) et le support de disque d'enregistrement (29) sont prévus géométriquement derrière le tachymètre (6) et son aiguille lorsque le tachygraphe est en position de fonctionnement et le support de disque d'enregistrement (29) peut sortir du boîtier (1) par le haut.

9. Tachygraphe selon la revendication 8, caractérisé en ce que le support de disque d'enregistrement (29) est monté dans le boîtier (1) de manière à pivoter autour d'un axe (27) et pour un tachymètre (6) restant en position fixe, ce support peut basculer par le haut en dehors du boîtier (1).

10. Tachygraphe selon la revendication 8, caractérisé en ce que le support de disque d'enregistrement (29) est coulissant dans le boîtier (2) et peut sortir par le haut du boîtier tout en laissant le tachymètre (6) en position fixe.

11. Tachygraphe selon la revendication 8, caractérisé en ce que le support de disque d'enregistrement (29) est mobile dans un plan essentiellement vertical.

12. Tachygraphe selon la revendication 8, caractérisé en ce que l'axe de rotation (29) du support de disque d'enregistrement est pratiquement parallèle à l'arbre de l'aiguille (7) du tachymètre (6) lorsque le tachygraphe est en position de fonctionnement.

13. Tachygraphe selon la revendication 8, caractérisé en ce que la chambre (47) qui loge le support de disque d'enregistrement (29) peut être fermé par un couvercle à serrure (101).

14. Tachygraphe selon la revendication 13, caractérisé en ce que le couvercle (101) est prévu sur une plaque (28) qui porte le support de disque d'enregistrement (29).

15. Tachygraphe selon la revendication 13, caractérisé en ce que le couvercle (101) recouvre en même temps d'autres points de fonctionnement (105, 106) du tachygraphe, notamment un bouton de réglage (104) pour l'horloge (24).

16. Tachygraphe selon la revendication 15, caractérisé en ce que le bouton de réglage (104) de l'horloge (24) est monté sur une plaque (24) qui porte le support de disque d'enregistrement (29).

17. Tachygraphe selon la revendication 15, caractérisé en ce que les autres pièces fonctionnelles comprennent un commutateur de codage (105) et une douille de connexion (106).

18. Tachygraphe selon la revendication 9, caractérisé par une transmission (50, 57, 62, 63) reliant l'horloge (24) en permanence avec le support de disque d'enregistrement (29), pivotant, et cette transmission comprend une roue de transmission (56) coaxiale à l'axe de pivotement (27).

19. Tachygraphe selon la revendication 10, caractérisé en ce que la transmission (112, 116, 117) qui relie en permanence l'horloge (24) avec le support de disque d'enregistrement (29) monté coulissant, comprend une liaison télescopique (113, 114, 115) solidaire en rotation.

20. Tachygraphe selon la revendication 8, caractérisé en ce que le dispositif de mesure de vitesse (6) et le compteur de distance (15, 16) ainsi que les compteurs de distance (15, 16) avec le tableau chiffré principal (5) et les aiguilles (7, 18, 22, 23) ainsi que les installations d'enregistrement, sont logés avec les stylets (34, 43, 44) dans un boîtier (1), commun, fixe, et qui ne peut être divisé.

Fig.1

# Fig.2

Fig.3

Fig.4

Fig.5

## Fig.6

## FIG.7